# EUROPEAN PATENT APPLICATION

(11) **EP 0 967 561 A1**
(43) Date of publication of application: **29.12.1999**
(21) Application number: 99109312.1
(22) Date of filing: 28.05.1999
(51) Int. Cl.: G06K 7/00

(54) **Connector for a low-profile miniature card**

(30) Priority: 26.06.1998 FR 9808166
(71) Applicant: FRAMATOME CONNECTORS INTERNATIONAL, 92400 Courbevoie (FR)
(72) Inventor: Michaud, Alexis, 25300 Pontarlier (FR); Vuillemin, Laurent, 25520 St-Gorgon Main (FR)
(74) Representative: Beetz & Partner Patentanwälte

(57) **Abstract**

The invention relates to a connector for a smart-card reader, comprising an insulating support (2) to which metal contacts (4) intended for electrically connecting the smart-card to a printed circuit are fastened.

According to the invention, the said contacts (4) are all oriented in the same direction so as to prevent the contacts from turning up when the smart card is being inserted into the card reader.

## Description

The present invention relates to a connector for a smart-card reader, the smart cards being of the miniature-card type, comprising an insulating support to which metal contacts intended for electrically connecting the smart card to a printed circuit are fastened.

Connectors of this type, which are known in the prior art, generally comprise two rows of contacts which are oriented in opposite directions one with respect to the other. In order therefore to keep the contacts lying in the second row in their housings, each of the contacts must be pre-stressed and thus exert a force on the upper wall of the insulation which, in order to withstand this force, must have a minimum thickness. Moreover, in this type of connector, the contacts are fastened in the insulation by harpoons which are lodged in a transverse cavity. This also has the effect of increasing the volume of the connectors and is a disincentive to them being used in applications requiring greater and greater miniaturization, as is the tendency, for example, in card readers fitted into GSM mobile telephones.

Furthermore, in applications relating to SMC (surface mounted component) soldering, the contact area between each metal contact and the contact pad on the printing circuit must be as large as possible if it is desired to exert a relatively high force on the component, for example when the card is being inserted into the reader.

The objective of the invention is to produce a very thin connector, of very significantly reduced dimensions, in which the contacts are kept in their housings without any prestress.

Another objective of the invention is to improve the effectiveness of the soldering of the SMC pads to the printed circuit.

In order to achieve these objectives, the contacts of the connector according to the invention are all oriented in the same direction, which is the direction of insertion of the card.

This arrangement prevents the contacts from turning up when the smart card is being inserted into the card reader.

It is therefore no longer necessary to prestress the contacts of the second row and eliminating this prestress makes it possible to reduce the thickness of the upper wall of the insulation even more.

Furthermore, in order to improve the effectiveness of the fastening, each pad to be soldered has, on its part intended to bear on the printed circuit when it passes through the oven, a hole allowing the solder to wick up by capillary effect. This technique is particularly advantageous when it is used for products having to withstand large forces, for example when a card is being inserted or when a device fitted with such a connector is being placed on a battery charger.

According to another characteristic of the invention, the pads to be soldered lie within the dimensions of the insulating support, thus making it possible to reduce the length of the connector provided that they do not extend beyond the sides of the connector, as in the prior art.

Other characteristics and advantages of the invention will emerge from the description which follows, given by way of non-limiting example, and with reference to the appended Figures in which:
- Figure 1 shows diagrammatically a perspective view of a smart-card connector according to the invention;
- Figure 2 shows a top view of the connector in Figure 1;
- Figure 3 shows a side view of the connector in Figure 1;
- Figure 4 shows a contact according to the invention, seen end-on; and
- Figure 5 shows a strip carrying contacts with pads intended to be surface soldered to the printed-circuit board.

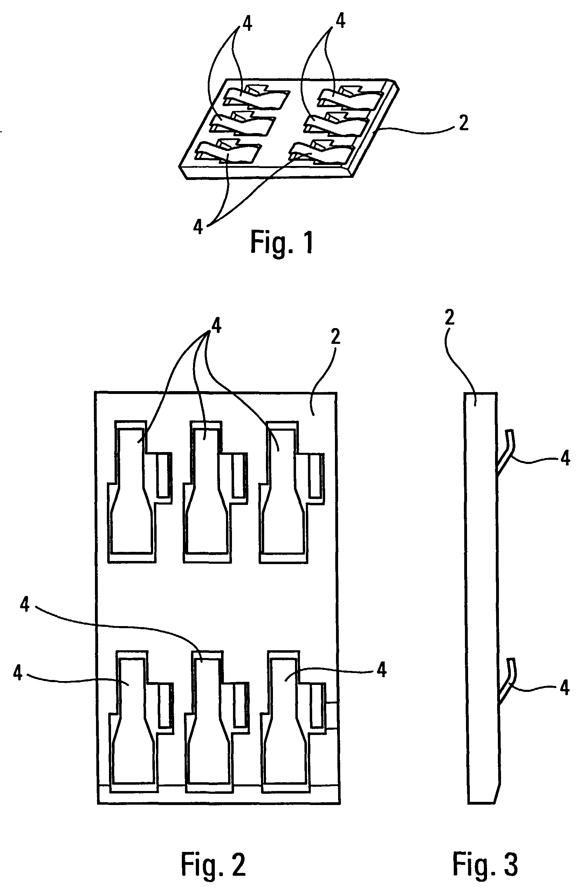

Figures 1 and 2 show a connector for a smart-card reader, comprising an insulating support 2 to which metal contacts 4 intended for electrically connecting the smart card to a printed circuit are fastened. As may be seen in these Figures, and in particular in Figure 3, the said contacts 4 are all oriented in the same direction so as to prevent the contacts from turning up when the smart card is being inserted into the card reader.

Preferably, the contacts 4 are fastened from underneath the connector, thus making it possible to dispense with the plastic part lying at the bottom of the connector, and these contacts are no longer fastened in the insulation, as in the prior art, by harpoons lodged in a transverse cavity. This fastening is achieved either by ultrasound or by cold deformation of the plastic of the insulation, which deformation is carried out from underneath, from the bottom upwards, thereby reducing the thickness of the product even more.

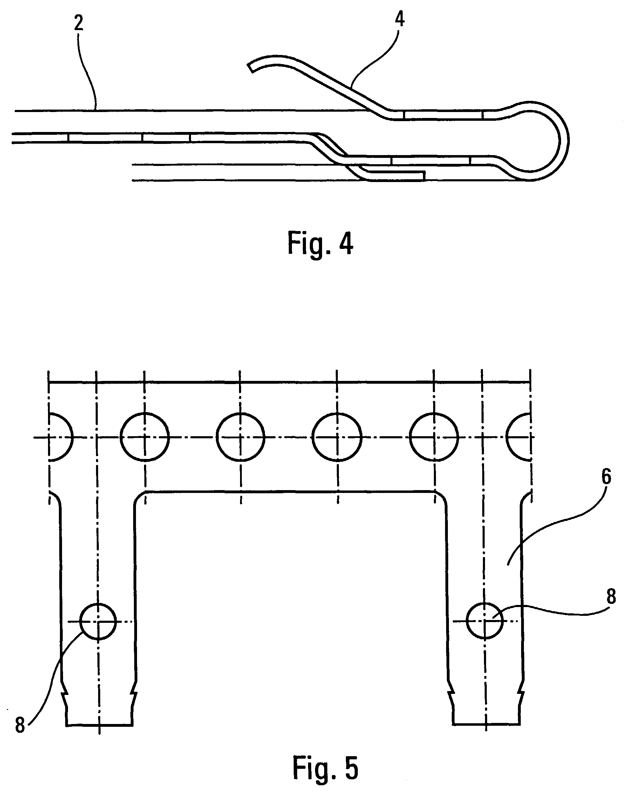

According to one embodiment of the invention, as shown in Figure 4, the pads 6 to be soldered to the printed circuit lie within the dimensions of the insulating support 2. As may be seen in Figure 5, each pad to be soldered has a hole 8 intended to allow the solder to wick up by capillary effect.

The position of the pads 6, between each main contact which is in connection with the smart card, also makes it possible to contribute to significantly reducing the external dimensions of the connector. In fact, these pads, which do not extend beyond the sides of the connector, make it possible to reduce the length of the product by the length of the said pads, i.e. by approximately 1 mm in the case of SMC pads, taking into account the bending in order to allow passage of the punches.

## Claims

1. Connector for a smart-card reader, comprising an insulating support (2) to which metal contacts (4) intended for electrically connecting the smart card to a printed circuit are fastened, characterized in that the said metal contacts (4) are all oriented in the same direction so as to prevent the contacts from turning up when the smart card is being inserted into the card reader.

2. Connector according to Claim 1, characterized in that the pads (6) to be soldered to the printed circuit lie within the dimensions of the insulating support (2).

3. Connector according to Claim 2, characterized in that each pad (6) to be soldered has at least one hole (8) allowing the solder to wick up by capillary effect.

4. Connector according to one of Claims 1 to 3, characterized in that the said contacts (4) are fastened in the insulation either by cold mechanical deformation or by ultrasound.
